# EUROPEAN PATENT SPECIFICATION

(11) **EP 2 390 623 B1**
(45) Date of publication and mention of the grant of the patent: **07.08.2019**
(21) Application number: 11167195.4
(22) Date of filing: 24.05.2011
(51) Int. Cl.: G01C 7/04, E01C 19/00

(54) **Method and apparatus for forming bearing course of traffic route**
Verfahren und Vorrichtung zum Bilden des Lagerverlaufs einer Verkehrsstrecke
Procédé et appareil pour former la couche porteuse d'une voie de trafic

(30) Priority: 27.05.2010 FI 20105598
(43) Date of publication of application: 30.11.2011
(73) Proprietor: Roadscanners Holding Oy, 96100 Rovaniemi (FI)
(72) Inventor: Saarenketo, Timo, 96400, Rovaniemi (FI)
(74) Representative: Berggren Oy, Helsinki & Oulu

(56) References cited:
- WO-A1-02/101328
- WO-A1-2008/085030
- US-A- 4 958 306
- US-A- 5 721 685
- US-A1- 2002 176 608
- US-A1- 2005 147 467

## Description

The invention relates to a method for forming a bearing course of a traffic route, in which method the surface of a bearing course of an existing traffic route is chosen as a reference level, the target level of the surface of the bearing course to be formed in relation to the reference level is determined and a forming procedure of the bearing course is performed, in which procedure the surface of the bearing course is brought to said target level. The invention relates also to the apparatus used in the method.

At the planning stage of traffic routes, the location of a road route in the terrain, the elevation of the surface of the road, the location of the road to be repaired and the thicknesses of the bearing courses of the road are determined. This information is forwarded to the construction site of the road, where the road construction project is executed in a planned manner. In the actual road construction nowadays machine automation is widely utilized, in which the planning data is fed directly into the control systems of the construction machines. A prerequisite for the use of automatic construction machines is however that the location and elevation information of the road route can be determined on the construction site quickly and with adequate accuracy. With the GPS system used nowadays the horizontal location coordinates (x, y) in the direction of the ground surface of the road route can be determined with adequate accuracy on the standpoint of road construction. The problem is however that in the vertical direction i.e. on the direction of the normal of the ground surface, the measurement accuracy of the GPS system is usually not adequate. On account of vertical inaccuracies of measurement, the GPS system cannot be used to determine the thickness of the bearing courses and the elevation of the road surface without base stations set up on the area of the construction site, with which the accuracy of the determination of the elevation of the location information is enhanced. Setting up base stations requires however expensive apparatuses and skilful measurers, which increases costs. Alternatively the heights of the bearing courses and the surface of the road have to be determined with other means, for example by taking level or with tachymeter measurements, which slows down the progress of the construction.

Documents US 6520715 B1 and US 2002/0176608 A1 disclose a system and device for obtaining a transverse profile of a road surface.

The aim of the invention is to present an improved method and apparatus for the construction of traffic routes, with which disadvantages and defects associated with the known technique can be eliminated.

The objectives according to the invention are achieved with a method and apparatus as set forth in the independent claims. Some preferred embodiments are presented in the dependent claims.

In a method according to the invention a bearing course of a traffic route is formed. In the method first some existing surface of the bearing course of a traffic route is selected as the reference level, in relation to which the target level of the surface of the bearing course to be formed is determined. Preferably the upper surface of the bearing course below the bearing course to be formed is chosen as the reference level. The bearing course can also be formed on top of the surface layer of an already existing traffic route, whereupon the upper surface of the surface layer of the traffic route can be chosen as the reference level. After this the forming procedure of the bearing course is performed, in which the surface of the bearing course to be formed is brought to the said target level. Typically the forming procedure of a bearing course comprises spreading, levelling and compacting of the soil layer on the surface of the reference level. The forming procedure can also comprise removing of a soil layer or reshaping of the surface of a bearing course. The location of the traffic route selected as the reference level is determined as plane coordinate points (xₙ, yₙ) in the terrain and in each coordinate point the elevation zₙ of the existing bearing course chosen as the reference level is determined. The coordinate points (xₙ, yₙ) of the location of the traffic route are preferably determined with satellite positioning method, such as with GPS positioning method. In the method in the coordinate points of the location of the traffic route the cross sectional figure of the reference level is determined, which cross sectional figure extends from the unchanged terrain on the first side of the traffic route over the surface of the traffic route to the unchanged terrain on the second side of the traffic route. The elevation of the reference level is thus determined with the help of cross sectional figures. The location and cross sectional figures of the traffic route chosen as the reference level are saved, preferably as spatial coordinate points (xₙ, yₙ, zₙᵣ), into a given value data file, which is used at the later stages of the forming of the bearing course. The basic idea of the method is thus that the elevation of the reference level is not determined accurately in relation to sea level, but in relation to the unchanged surroundings on the edge zones of the traffic route. With unchanged surroundings is meant points of terrain that are not a target for procedures subject to substantial terrain surface altering procedures in connection with forming of the bearing course. The method according to the invention is suited to be used especially well in all those lower priority traffic routes in which the elevations of the cross section of the traffic route are not bound accurately to the height of sea level at the planning stage. This kind of traffic routes are i.a. forest truck roads, private roads, and pedestrian and bicycle ways in common use. The method is suited both to constructing completely new traffic routes and repairing and reconditioning already existing traffic routes.

In a preferred embodiment of the method according to the invention the elevation zₙₜ of the reference level in each measurement point (xₙ, yₙ) is determined by adding to the elevation of the reference level of said measurement point the planned height h given in the planning information.

In a second preferred embodiment of the method according to the invention the elevation zₙₘ of the upper surface level of the formed bearing course is determined in coordinate point (xₙ, yₙ) and compared to the determined elevation zₙₜ of the reference level in the same coordinate point. The comparison is made continuously in connection with the production of the bearing course of the road, whereupon the makers of the bearing course have immediately at their disposal the knowledge when the height of the bearing course is within the allowed limits defined by the planning information.

In a third preferred embodiment of the method according to the invention the elevations zₙₘ of the upper surface level of the formed bearing course and elevations zₙᵣ of the reference level in the coordinate points (xₙ, yₙ) of the traffic route are determined with laser scanning. The laser scanning can be performed from a vehicle travelling along the traffic route and/or from a construction machine participating in forming the bearing course and travelling along the traffic route.

The method according the invention can be used in forming of any bearing course of a traffic route. The bearing course to be formed can thus be the sub-base bearing course, the road base or the surface layer.

The apparatus according to the invention for forming of the bearing course of a traffic route comprises positioning means for determining the location of the traffic route chosen as the reference level in the terrain as coordinate points (xₙ, yₙ) and measuring means for determining the elevation (zₙ) of the surface of the bearing course of an existing traffic route chosen as the reference level in each coordinate point (xₙ, yₙ) as a cross sectional figure of the reference level extending from the unchanged terrain on the first side of the traffic route over the surface of the traffic route to the unchanged terrain on the second side of the traffic route. The apparatus comprises also data saving means for saving the location and cross sectional figures of the traffic route chosen as the reference level, preferably as coordinate points, (xₙ, yₙ, zₙ), into the given value data file. Preferably said positioning means comprise satellite positioning means, such as GPS positioning means and/or comprise distance measuring means, such as a precision trip meter, placed in a vehicle.

In a preferred embodiment of the apparatus according to the invention said measuring means for determining the elevation of the surface of the bearing course comprise a laser scanner. Preferably the apparatus comprises further an apparatus that measures the 3D-inclination of a laser scanner, such as a gyroscopic apparatus or apparatus comprising lateral inclination sensors.

In a second preferred embodiment of the apparatus according to the invention said saving means for saving the location and cross sectional figures of the reference level comprise a computer and a computer software loaded into the memory of the computer. Preferably said saving means comprise further an analysing program for the processing of the measurement results and for controlling the construction work.

In a third preferred embodiment of the apparatus according to the invention said positioning means, measuring means and saving means are arranged in a vehicle with which can be travelled on the surface of the bearing course chosen as the reference level and on the surface of the bearing course to be formed. Preferably the positioning means, measuring means and the saving means are arranged in a construction machine, such as a truck or a vibrating roller, used in forming of a bearing course.

An advantage of the invention is that with its help especially in the construction and reparing projects of lower priority traffic routes traditional manual height determining methods and/or expensive base station based GPS equipment can be abandoned. Thus significant savings can be made in the construction costs of a traffic route.

A markedly better accuracy is also achieved with the method according to the invention in determining of the heights of the bearing courses than with traditional manual methods, whereupon the quality of the construction work is improved. The construction work can easily be automated and the progress of the work can be documented accurately in all stages.

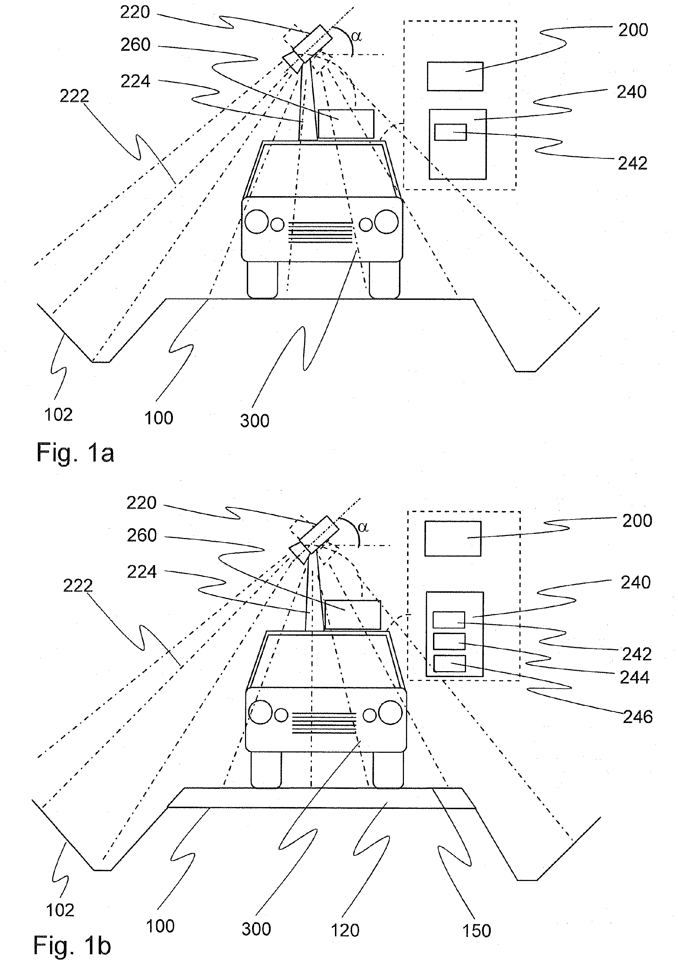

In the following the invention is described in detail. In the description reference is made to the accompanying figures, in which
- Fig. 1a: presents by way of example a reference level determination of a traffic route included in the method according to the invention,
- Fig. 1b: presents by way of example forming of a bearing course on the surface of the bearing course that functioning as a reference level and

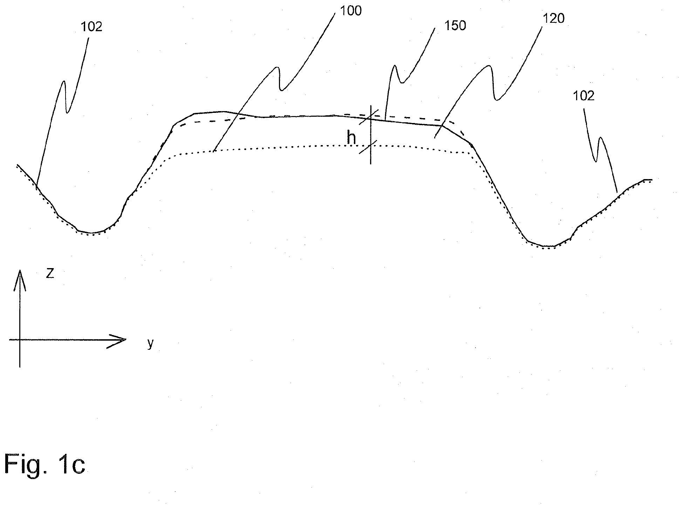

- Fig. 1c: presents by way of example cross sectional figures of a traffic route determined with the apparatus according to the invention.

Figures 1a and 1b present by way of example a reference level determination of a traffic route included in the method according to the invention. In the method the surface of an existing bearing course of a traffic route is first chosen as the reference level 100 and the elevation and lateral inclination of this reference level in relation to the unchanged terrain surrounding the road route is determined. With the unchanged terrain surrounding the road route is meant here that kind of terrain to which no changes effecting the surface level of the terrain are made during the forming of the bearing courses of the traffic route. Typically this sort of surrounding terrain that stays unchanged are substantially all terrain areas and ground surface formations at the side of the road route at an adequate distance from the road route, such as ditches bordering the roads and edge drops 102 of the ditches. The determination of the reference level is made with vehicle 300, which is equipped with a GPS positioning apparatus 200, a laser scanner 220 and a computer 240 meant for saving and processing of measurement and positioning data. The laser scanner is placed on the end of the mast 224 on the roof of a vehicle so that the laser beams transmitted from the laser scanner can be directed at the surface of the bearing course of the traffic route and the terrain surrounding the traffic route on different sides of the vehicle. The laser scanner is equipped with a gyroscopic apparatus 260 or some other apparatus that measures accurately in 3D angle of inclination, with the help of which the angle of inclination a of the laser beam 222 transmitted from the scanner can be determined in relation to the horizontal plane. In the computer there is in a known manner a key board or other means for entering data, a processor, a memory and an operating system loaded into the memory, a computer software suitable for saving data and an analysing software suitable for analysing the measurement results and guiding the construction work. The computer, the laser scanner and the GPS satellite positioning system are known technique as such, so they are not described in further detail in this connection.

In the method vehicle 300 is driven along the reference level forming traffic route and the elevation zₙᵣ of the reference level i.e. the surface of the road in relation to the surrounding fixed terrain. The vehicle can be a vehicle used by the construction site management or the planners or a construction machine participating in the forming of the bearing courses, such as a truck used in moving the soil, a road grader used in levelling the bearing courses or a vibrating roller used to compact the bearing courses. The measuring is started from the first end of the reference level, i.e. from that point of the traffic route from which the making of the bearing courses starts and the measuring is ended at the second end of the reference level i.e. in that point of the traffic route where the forming of the bearing courses ends. Measurements are made on suitable intervals throughout the whole length of the reference level. The distance between the measurement points can be for example in the range of 0.2-0.5 meters. Preferably measurements are made 2, 3 or 4 per each traffic route meter. In each measurement point the accurate location of the measurement point in the terrain as plane coordinate points (xₙ, yₙ) is determined with the help of a GPS positioning apparatus. The measuring of the elevation zₙᵣ of the measurement point is performed with a laser scanner 220 that measures with the help of a laser beam 222 the distance to the unchanged terrain surrounding the measurement point. With the help of the measuring angle a determined with the help of the measured distance and the gyroscopic apparatus, the cross section (yₙ, zₙᵣ) of the surface of the traffic route i.e. of the reference level is formed in the measurement point. A cross sectional figure of the traffic route is thus formed in each measurement point with the help of a laser scanner, which cross sectional figure extends from the unchanged terrain on the first side of the traffic route over the surface of the traffic route to the unchanged terrain on the second side of the traffic route (Fig. 1c). The measurement results are saved in the memory of the computer as spatial coordinate points (xₙ, yₙ, zₙᵣ), which is formed of a plane coordinate of a measurement point and from a cross sectional figure, determined in the measurement point, of the reference level. A given value data file 242 of the reference level is gathered from consecutive cross sectional figures of the traffic route, which given value data file is saved in the memory of a computer 240. The determination of the given value data file of the reference level can be performed well in advance before starting the earthwork connected with the forming of the actual bearing courses. The given value data file can be determined by for example the planner of the road construction project or a manager of the construction site.

Figure 1b presents by way of example the forming of one new bearing course 120 on the surface of a traffic route. The bearing course is formed by spreading soil, such as gravel, crushed stone or fine crushed gravel, used in the bearing course to be formed on the surface of the traffic route functioning as a reference level, to the extent of the layer thickness defined in the plans and by compacting the soil into the grade of compactness according to the plans. In the method a target level 150 is determined for the upper surface of the bearing course to be formed in relation to the unchanged terrain surrounding the traffic route. The elevation zₙᵣ of the target level of the bearing course in different measurement points (xₙ, yₙ) is reached by adding to the above determined elevations zₙᵣ of the reference level the height h of the bearing course given in the planning information. An own target data file 244 for each bearing course can be formed out of the heights of the target level determined along the whole length of the traffic route, which target data file determines the target level of the bearing course to be formed as spatial coordinate points (xₙ, yₙ, zₙₜ).

In the method soil is transported to the surface of the reference level with trucks, after which the soil is spread on the surface of the reference level as an even layer with a road grader. Finally the soil layer is compacted to the appropriate grade of compactness with a vibrating roller. Construction machines participating in the forming of the bearing course are equipped with the apparatus according to the invention, which determines in each measurement point (xₙ, yₙ) of the traffic route the current cross section of the traffic route (Fig. 1c) with the help of a GPS satellite positioning device and laser scanner 220. The respective elevation zₙₘ of the upper surface of the bearing course becomes evident from this cross section in relation to the unchanged terrain next to the traffic route. The driver of the construction machine has thus always at his disposal while travelling on top of the bearing course to be formed real time information on how the surface of the bearing course stands in relation to the target level. With the help of this information the drivers of the construction machines can perform the necessary earth work procedures with which the actual elevation of the upper surface of the bearing course can be made as close as possible to the elevation of the target level in all points of the cross section of the traffic route. These procedures can comprise adding or reducing the soil.

When the actual elevation of the bearing course has been brought near enough the target level, a realisation data file 246 can be created out of measurement information of the elevation of the upper surface of the bearing course, which realisation data file determines the realised upper level of the formed bearing course as a group of consecutive cross sectional figures of the road route. If a second bearing course will be formed on top of the newly formed bearing course, the first bearing course will act as a reference level for the second bearing course to be formed next. The realisation data file 246 of the first bearing course can thus be used as such as the given value data file 242 of the second bearing course. In an above prescribed way all bearing courses of the traffic route can be formed, such as the base course, the sub-base and the surface layer i.e. the paving. The realisation data files of all bearing courses saved in the memory of the computer can be gathered into one measurement data file, and submitted to the buyer of the road construction project.

Figure 1c presents by way of example cross sectional figures of a traffic route determined with a method and apparatus according to the invention in a measurement point of a traffic route. The cross section presented with a dotted line in Figure 1c presents a cross section of the reference level 100 at the measurement point and a cross section of the same measurement point is presented with a continuous line in the forming stage of the bearing course 120. Both cross sections extend form their edges until the edge drop 102 of the ditch bordering the traffic route, which edge drop remains unchanged during the forming of the bearing course. The cross sectional figures on the part of the unchanged terrain are substantially congruent. In the unchanged terrain some changes during the forming of the bearing course can occur due to fast growing surface vegetation, such as for the growth of grasses. Changes occurring in the vegetation are however such that their effect on the cross sections of the traffic route can be taken into account with the help of saving and analysing software included in the apparatus.

Further a target level 150 of a bearing course of a traffic route is presented with a dash line in the Figure, which target level has been gained by adding the height h of the bearing course determined in the plans to the reference level. With the help of the information acquired with the help of cross sectional figures the operators of the construction machines can always see clearly in which stage the surface of the bearing course to be formed is in relation to the target level and can make on the basis of it the necessary forming procedures.

In the previous description all construction machines participating in the forming of the bearing course were equipped with an apparatus according to the invention. It is obvious that all these construction machines and/or vehicles do not need to have an apparatus according to the invention. In order to realise the method according the invention it is enough that at least one construction machine or vehicle is equipped with said apparatus, whereupon the necessary determinations of the elevations of the bearing courses can be made with this construction machine or vehicle. The elevations determined with one apparatus can be forwarded with a suitable data transmission method to other construction machines participating in the forming of the bearing courses, whereupon the data is at everybody's disposal. The thicknesses of the bearing courses can be presented to the operators of the construction machines in any suitable manner, such as numeric values or preferably with the help of colours. For example red colour can mean a too thin bearing course, green colour suitable height and blue colour a too high bearing course. A vehicle comprising apparatus according to the invention can be equipped further with a ground penetrating radar, whereupon the thickness of a bearing course can be confirmed with ground penetrating radar measurements if needed. If the apparatus is for example on the vibrating roller, an acceleration sensor can be added into the apparatus, with which sensor the grade of compactness of the bearing course can be measured.

The cross sections of the traffic route presented in the previous description are determined with laser scanning in the transverse direction in relation to the longitudinal direction of the traffic route. The cross section of a traffic route can be determined with the method according to the invention also in the longitudinal direction of the traffic route in a previously described way. The longitudinal determination is suited to be used especially with such short traffic route legs which do not have reliable surroundings that stay unchanged on the edges of the traffic route. The determination of a longitudinal cross section of a traffic route can be used either alternatively with the determination performed in the transverse direction or as an addition to the transverse direction. With the help of the determination of a cross section performed in the longitudinal direction, the evenness of the traffic route can be verified.

Some preferred embodiments of the method and apparatus according to the invention are described above. The invention is not restricted to the solutions just described but the inventive idea can be applied in numerous ways within the limits set by the claims.

## Claims

1. A method for forming a bearing course (120) of a road, in which method an existing surface of the bearing course of the road is chosen as a reference level (100) in relation to which a target level (150) of a surface of a bearing course to be formed is determined, and a forming procedure of the bearing course is performed, in which procedure the surface of the bearing course is brought to said target level, wherein
- locations of the road chosen for the reference level are determined in the terrain with positioning means as plane coordinate points (xₙ, yₙ), **characterized in that**:
- an elevation (zₙᵣ) of an existing bearing course chosen as the reference level is determined for each plane coordinate point (xₙ, yₙ) with measuring means by determining a cross sectional figure of the reference level extending from terrain that stays unchanged during the formation of the bearing course on a first side of the road, over the surface of the road, to terrain that stays unchanged during the formation of the bearing course on a second side of the road,
- the locations and cross sectional figures of the road chosen as the reference level are saved as the given value data file (242) of the forming of the bearing course,
- in the forming procedure of the bearing course the target level (150) for the upper surface of the bearing course to be formed is determined in relation to the unchanged terrain surrounding the road by adding a planned height h of the bearing course (120) to the elevation (zₙᵣ) of the reference level (100) for different plane coordinate points (xₙ, yₙ),
- during forming of the bearing course an actual elevation (zₙₘ) of the upper surface of the bearing course (120) being formed is determined in relation to the unchanged terrain surrounding the road by determining current cross section of the road for each plane coordinate point (xₙ, yₙ) with the help of the positioning means and the measuring means, and
- the actual elevation (zₙₘ) of an upper surface level of bearing course (120) being formed is compared to the determined elevation (zₙₜ) of the target level (150) for a same plane coordinate point (xₙ, yₙ).

2. The method according to claim 1, wherein the coordinate points (xₙ, yₙ) of the locations of the road are determined with a satellite positioning method, preferably with GPS positioning method.

3. The method according to claim 1 or 2, wherein the elevation (zₙₜ) of the target level (150) is determined in each measurement point (xₙ, yₙ).

4. The method according to any of claims 1-3, wherein the elevations (zₙₘ) of the upper surface level of the formed bearing course (120) and the elevations (zₙᵣ) of the reference level (100) in the coordinate point (xₙ, yₙ) of the road are determined with laser scanning.

5. The method according to claim 4, wherein laser scanning is performed from a vehicle (300) travelling along the road.

6. The method according to claim 4, wherein laser scanning is performed from a construction machine travelling along the road and participating in the forming of the bearing course (120).

7. The method according to any of claims 1-6, wherein a sub-base (120) of the road is formed with the method as the bearing course to be formed.

8. The method according to any of claims 1-7, wherein a base course (120) of the road is formed with the method as the bearing course to be formed.

9. The method according to any of claims 1-8, wherein a surface layer of the road is formed with the method as the bearing course to be formed.

10. The method according to claim 1-9, wherein an upper surface of a surface layer of the road is chosen as the reference level.

11. An apparatus adapted to forming a bearing course of a traffic course, wherein said apparatus comprises
- positioning means for determining locations of the road chosen for the reference level in the terrain as plane coordinate points (xₙ, yₙ)
**characterised in that** said apparatus further comprises:
- measuring means adapted to determining the elevation (zₙᵣ) of the surface of an existing bearing course of a road in each plane coordinate point (xₙ, yₙ) as a cross sectional figure of the reference level extending from terrain that stays unchanged during the formation of the bearing course on a first side of the road, over the surface of the road, to terrain that stays unchanged during the formation of the bearing course on a second side of the road,
- saving means adapted to saving the location and cross sectional figures of the road chosen as the reference level into a given value data file (242) and
- means configured to
determine the target level (150) for the upper surface of the bearing course (120) to be formed in relation to the unchanged terrain surrounding the road by adding a planned height h of the bearing course (120) to the elevation (zₙᵣ) of the reference level (100) for different plane coordinate points (xₙ, yₙ),
determine an actual elevation (znm) of the upper surface of the bearing course being formed in relation to the unchanged terrain surrounding the road by determining a current cross section of the road with the help of the positioning means and the measuring means, and
compare the elevation (zₙₘ) of an upper surface level of bearing course (120) being formed to the determined elevation (zₙₜ) of the target level (150) for a same plane coordinate point (xₙ, yₙ).

12. The apparatus according to claim 11, wherein said positioning means comprise satellite positioning means, preferably GPS positioning means (200).

13. The apparatus according to claim 11, wherein said positioning means comprise distance-measuring means placed in a vehicle, preferably a so-called precision trip meter.

14. The apparatus according to any of claims 11-13, wherein said measuring means for determining the elevation of the surface of the bearing course comprise a laser scanner (220).

15. The apparatus according to claim 14, wherein it comprises further an apparatus measuring the 3D inclination α of the laser scanner, such as a gyroscopic apparatus (260).

16. The apparatus according to any of claims 11-13, wherein said saving means for saving the location and elevation of the reference level comprise a computer (240) and a computer software loaded in the memory of a computer (240).

17. The apparatus according to claim 16, wherein said saving means comprise further an analysing software for processing measurement results and for controlling the construction work.

18. The apparatus according to any of claims 11-17, wherein said positioning means, measuring means and saving means are arranged in a vehicle (300).

19. The apparatus according to any of claims 11-18, wherein said positioning means, measuring means and saving means are arranged in a construction machine used in the forming of a bearing course (120).

## Patentansprüche

1. Verfahren zum Ausbilden einer Tragschicht (120) einer Verkehrsroute, bei welchem Verfahren eine existierende Oberfläche der Tragschicht der Verkehrsroute als Bezugsniveau (100) ausgewählt wird, wobei ein Zielniveau (150) einer Oberfläche einer Tragschicht, die auszubilden ist, in Bezug auf das Bezugsniveau ermittelt wird und ein Herstellablauf der Tragschicht durchgeführt wird, bei welchem Ablauf die Oberfläche der Tragschicht auf das Zielniveau gebracht wird, wobei
- Orte der Verkehrsroute, die als Bezugsniveau ausgewählt wurde, in dem Gelände mit einer Positionierungseinrichtung als Ebenenkoordinatenpunkte (xn, yn) ermittelt werden,
**dadurch gekennzeichnet, dass**
- eine Erhebung (znr) einer existierenden Tragschicht, die als das Bezugsniveau ausgewählt wurde, für jeden Ebenenkoordinatenpunkt (xn, yn) mit einer Messeinrichtung durch Ermitteln einer Querschnittsabbildung des Bezugsniveaus ermittelt wird, das sich von einem Gelände erstreckt, das während des Ausbildens der Tragschicht an einer ersten Seite der Verkehrsroute über der Oberfläche der Verkehrsroute relativ zu dem Gelände unverändert bleibt, das während des Ausbildens der Tragschicht an einer zweiten Seite der Verkehrsroute unverändert bleibt,
- die Orte und die Querschnittsabbildungen der als Bezugsniveau ausgewählten Verkehrsroute als Datendatei mit vorgegebenem Wert (242) bei der Ausbildung der Tragschicht gespeichert werden.
- das Zielniveau (150) für die obere Oberfläche der Tragschicht, die auszubilden ist, bei dem Ausbildungsablauf der Tragschicht im Verhältnis zu dem unveränderten Gelände, das die Verkehrsroute umgibt, durch Addieren einer geplanten Höhe h der Tragschicht (120) zu der Erhebung (znr) des Bezugsniveaus (100) für verschiedene Ebenenkoordinatenpunkte (xn, yn) ermittelt wird,
- während des Ausbildens der Tragschicht eine Ist-Erhebung (znm) der oberen Oberfläche der Tragschicht (120), die ausgebildet wird, im Verhältnis zu dem unveränderten Gelände, das die Verkehrsroute umgibt, durch Ermitteln des derzeitigen Querschnitts der Verkehrsroute für jeden Ebenenkoordinatenpunkt (xn, yn) mithilfe der Positioniereinrichtung und der Messeinrichtung ermittelt wird, und
- die Ist-Erhebung (znm) eines oberen Oberflächenniveaus der Tragschicht (120), die ausgebildet wird, mit der ermittelten Erhebung (znt) des Zielniveaus (150) für denselben Ebenenkoordinatenpunkt (xn, yn) verglichen wird.

2. Verfahren nach Anspruch 1, wobei die Koordinatenpunkte (xn, yn) der Orte der Verkehrsroute mit einem Satellitenpositionierverfahren, bevorzugt mit einem GPS-Positionierverfahren, ermittelt werden.

3. Verfahren nach Anspruch 1 oder 2, wobei die Erhebung (znt) des Zielniveaus (150) bei jedem Messpunkt (xn, yn) ermittelt wird.

4. Verfahren nach einem der Ansprüche 1 bis 3, wobei die Erhebungen (znm) des oberen Oberflächeniveaus der ausgebildeten Tragschicht (120) und die Erhebungen (znr) des Bezugsniveaus (100) in dem Koordinatenpunkt (xn, yn) der Verkehrsroute mittels Laserscanning ermittelt werden.

5. Verfahren nach Anspruch 4, wobei das Laserscanning von einem Fahrzeug (300) aus durchgeführt wird, das sich entlang der Verkehrsroute bewegt.

6. Verfahren nach Anspruch 4, wobei das Laserscanning von einer Baumaschine aus durchgeführt wird, die entlang der Verkehrsroute fährt und beim Ausbilden der Tragschicht (120) mitwirkt.

7. Verfahren nach einem der Ansprüche 1 bis 6, wobei eine Sub-Basis (120) der Verkehrsroute mit dem Verfahren als die Tragschicht, die auszubilden ist, ausgebildet wird.

8. Verfahren nach einem der Ansprüche 1 bis 7, wobei eine Basisschicht (120) der Verkehrsroute mit dem Verfahren als die Tragschicht, die auszubilden ist, ausgebildet wird.

9. Verfahren nach einem der Ansprüche 1 bis 8, wobei eine Oberflächenschicht der Verkehrsroute mit dem Verfahren als die Tragschicht, die auszubilden ist, ausgebildet wird.

10. Verfahren nach einem der Ansprüche 1 bis 9, wobei eine obere Oberfläche einer Oberflächenschicht der Verkehrsroute als das Bezugsniveau ausgewählt wird.

11. Vorrichtung zur Ausbildung einer Tragschicht einer Verkehrsschicht, wobei die Vorrichtung, umfasst
- eine Positioniereinrichtung zum Ermitteln von Orten der als das Bezugsniveau ausgewählten Verkehrsroute in dem Gelände als Ebenenkoordinatenpunkte (xn, yn) **dadurch gekennzeichnet, dass** die Vorrichtung ferner umfasst:
- eine Messeinrichtung, ausgelegt zum Ermitteln der Erhebung (znr) der Oberfläche einer existierenden Tragschicht einer Verkehrsroute an jedem Ebenenkoordinatenpunkt (xn, yn) als eine Querschnittsabbildung des sich von dem Gelände erstreckenden Bezugsniveaus, das während des Ausbildens der Tragschicht an einer ersten Seite der Verkehrsroute über der Oberfläche der Verkehrsroute relativ zu einem Gelände unverändert bleibt, das während des Ausbildens der Tragschicht an einer zweiten Seite der Verkehrsroute unverändert bleibt,
- eine Speichereinrichtung, ausgelegt zum Speichern des Orts und der Querschnittsabbildungen der als Bezugsniveau ausgewählten Verkehrsroute in einer Datendatei mit vorgegebenen Werten (242) und
- eine Einrichtung, die dazu konfiguriert ist, das Zielniveau (150) für die obere Oberfläche der Tragschicht (120), die auszubilden ist, im Verhältnis zu dem unveränderten Gelände, das die Verkehrsroute umgibt, durch Addieren einer geplanten Höhe h der Tragschicht (120) zu der Erhebung (znr) des Bezugsniveaus (100) für verschiedene Ebenenkoordinatenpunkte (xn, yn) zu ermitteln,
eine Ist-Erhebung (znm) der oberen Oberfläche der Tragschicht, die ausgebildet wird, im Verhältnis zu dem unveränderten Gelände, das die Verkehrsroute umgibt, durch Ermitteln eines derzeitigen Querschnitts der Verkehrsroute mithilfe der Positioniereinrichtung und der Messeinrichtung zu ermitteln, und
die Erhebung (znm) eines oberen Oberflächenniveaus der Tragschicht (120), die ausgebildet wird, mit der ermittelten Erhebung (znt) des Zielniveaus (150) für denselben Ebenenkoordinatenpunkt (xn, yn) zu vergleichen.

12. Vorrichtung nach Anspruch 11, wobei die Positioniereinrichtung eine Satellitenpositioniereinrichtung, bevorzugt eine GPS-Positioniereinrichtung (200), umfasst.

13. Vorrichtung nach Anspruch 11, wobei die Positioniereinrichtung eine Abstandsmesseinrichtung umfasst, die in einem Fahrzeug, bevorzugt einen sogenannten Präzisionstageskilometerzähler, angeordnet ist.

14. Vorrichtung nach einem der Ansprüche 11 bis 13, wobei die Messeinrichtung zum Ermitteln der Erhebung der Oberfläche der Tragschicht einen Laserscanner (220) umfasst.

15. Vorrichtung nach Anspruch 14, wobei sie ferner eine Vorrichtung umfasst, die die 3D-Neigung (a) des Laserscanners misst, wie beispielsweise eine gyroskopische Vorrichtung (260).

16. Vorrichtung nach einem der Ansprüche 11 bis 13, wobei die Speichereinrichtung zum Speichern des Orts und der Erhebung des Bezugsniveaus einen Computer (240) und ein Computerprogramm, das in den Speicher eines Computers (240) geladen ist, umfasst.

17. Vorrichtung nach Anspruch 16, wobei die Speichereinrichtung ferner eine Analysesoftware zum Verarbeiten von Messergebnissen und zum Steuern der Bauarbeiten umfasst.

18. Vorrichtung nach einem der Ansprüche 11 bis 17, wobei die Positioniereinrichtung, Messeinrichtung und Speichereinrichtung in einem Fahrzeug (300) angeordnet sind.

19. Vorrichtung nach einem der Ansprüche 11 bis 18, wobei die Positioniereinrichtung, Messeinrichtung und Speichereinrichtung in einer Baumaschine, die beim Ausbilden einer Tragschicht (120) verwendet wird, angeordnet sind.

## Revendications

1. Procédé pour former une couche porteuse (120) d'une route, comprenant les étapes consistant à choisir une surface existante de la couche porteuse de la route comme niveau de référence (100) par rapport auquel un niveau cible (150) d'une surface d'une couche porteuse à former est déterminé, et à effectuer une procédure de formation de la couche porteuse, la surface de la couche porteuse étant ainsi amenée audit niveau cible,
les emplacements de la route choisis pour le niveau de référence étant déterminés dans le terrain avec un moyen de positionnement comme points de coordonnées plans (xₙ, yₙ),
**caractérisé en ce que** :
une élévation (zₙᵣ) d'une couche porteuse existante choisie comme niveau de référence étant déterminée pour chaque point de coordonnées plan (xₙ, yₙ) avec un moyen de mesure en déterminant une figure en coupe transversale du niveau de référence s'étendant du terrain qui reste inchangé pendant la formation de la couche porteuse sur un premier côté de la route, sur la surface de la route, au terrain qui reste inchangé pendant la formation de la couche porteuse sur un second côté de la route,
les emplacements et les figures en coupe transversale de la route choisie comme niveau de référence étant sauvegardés comme fichier de données de valeur donnée (242) de la formation de la couche porteuse,
dans la procédure de formation de la couche porteuse, le niveau cible (150) pour la surface supérieure de la couche porteuse à former étant déterminé par rapport au terrain inchangé entourant la route en ajoutant une hauteur planifiée h de la couche porteuse (120) à l'élévation (zₙᵣ) du niveau de référence (100) pour différents points de coordonnées plans (xₙ, yₙ),
pendant la formation de la couche porteuse, une élévation réelle (zₙₘ) de la surface supérieure de la couche porteuse (120) en cours de formation étant déterminée par rapport au terrain inchangé entourant la route en déterminant la coupe transversale actuelle de la route pour chaque point de coordonnées plan (xₙ, yₙ) à l'aide du moyen de positionnement et du moyen de mesure, et
l'élévation réelle (zₙₘ) d'un niveau de surface supérieure d'une couche porteuse (120) en cours de formation étant comparée à l'élévation déterminée (zₙₜ) du niveau cible (150) pour un même point de coordonnées plan (xₙ, yₙ).

2. Procédé selon la revendication 1, les points de coordonnées (xₙ, yₙ) des emplacements de la route étant déterminés par un procédé de positionnement par satellite, de préférence par un procédé de positionnement GPS.

3. Procédé selon la revendication 1 ou 2, l'élévation (Zₙₜ) du niveau cible (150) étant déterminée dans chaque point de mesure (xₙ, yₙ).

4. Procédé selon l'une quelconque des revendications 1 à 3, les élévations (zₙₘ) du niveau de surface supérieure de la couche porteuse (120) formée et les élévations (zₙᵣ) du niveau de référence (100) dans le point de coordonnées (xₙ, yₙ) de la route étant déterminées par balayage laser.

5. Procédé selon la revendication 4, le balayage laser étant effectué à partir d'un véhicule (300) circulant sur la route.

6. Procédé selon la revendication 4, le balayage laser étant effectué à partir d'une machine de construction se déplaçant sur la route et participant à la formation de la couche porteuse (120).

7. Procédé selon l'une quelconque des revendications 1 à 6, une couche de fondation (120) de la route étant formée avec le procédé comme couche porteuse à former.

8. Procédé selon l'une quelconque des revendications 1 à 7, une couche de base (120) de la route étant formée avec le procédé comme couche porteuse à former.

9. Procédé selon l'une quelconque des revendications 1 à 8, une couche de surface de la route étant formée avec le procédé comme couche porteuse à former.

10. Procédé selon l'une quelconque des revendications 1 à 9, une surface supérieure d'une couche de surface de la route étant choisie comme niveau de référence.

11. Appareil conçu pour former une couche porteuse d'une couche de circulation, ledit appareil comprenant
un moyen de positionnement pour déterminer les emplacements de la route choisie pour le niveau de référence dans le terrain comme points de coordonnées plans (xₙ, yₙ)
**caractérisé en ce que** ledit appareil comprend en outre :
un moyen de mesure conçu pour déterminer l'élévation (zₙᵣ) de la surface d'une couche porteuse existante d'une route dans chaque point de coordonnées plan (xₙ, yₙ) comme figure en coupe transversale du niveau de référence s'étendant du terrain qui reste inchangé pendant la formation de la couche porteuse sur un premier côté de la route sur la surface de la route, au terrain qui reste inchangé pendant la formation de la couche porteuse sur un second côté de la route,
un moyen d'enregistrement conçu pour enregistrer l'emplacement et les figures en coupe transversale de la route choisie comme niveau de référence dans un fichier de données de valeur donnée (242), et
un moyen conçu pour déterminer le niveau cible (150) pour la surface supérieure de la couche porteuse (120) à former par rapport au terrain inchangé entourant la route en ajoutant une hauteur planifiée h de la couche porteuse (120) à l'élévation (zₙᵣ) du niveau de référence (100) pour différents points de coordonnées plans (xₙ, yₙ),
déterminer une élévation réelle (zₙₘ) de la surface supérieure de la couche porteuse formée par rapport au terrain inchangé entourant la route en déterminant une coupe transversale actuelle de la route à l'aide du moyen de positionnement et du moyen de mesure, et
comparer l'élévation (zₙₘ) d'un niveau de surface supérieure de la couche porteuse (120) en cours de formation à l'élévation déterminée (zₙₜ) du niveau cible (150) pour un même point de coordonnées plan (xₙ, yₙ).

12. Appareil selon la revendication 11, ledit moyen de positionnement comprenant un moyen de positionnement par satellite, de préférence un moyen de positionnement GPS (200).

13. Appareil selon la revendication 11, ledit moyen de positionnement comprenant un moyen de mesure de distance placé dans un véhicule, de préférence un compteur journalier de précision.

14. Appareil selon l'une quelconque des revendications 11 à 13, ledit moyen de mesure pour déterminer l'élévation de la surface de la couche porteuse comprenant un scanner laser (220).

15. Appareil selon la revendication 14, comprenant en outre un appareil mesurant l'inclinaison 3D α du scanner laser, tel qu'un appareil gyroscopique (260).

16. Appareil selon l'une quelconque des revendications 11 à 13, ledit moyen d'enregistrement pour enregistrer la position et l'élévation du niveau de référence comprenant un ordinateur (240) et un logiciel chargé dans la mémoire d'un ordinateur (240).

17. Appareil selon la revendication 16, ledit moyen d'enregistrement comprenant en outre un logiciel d'analyse pour traiter les résultats de mesure et pour commander les travaux de construction.

18. Appareil selon l'une quelconque des revendications 11 à 17, ledit moyen de positionnement, ledit moyen de mesure et ledit moyen de sauvegarde étant disposés dans un véhicule (300).

19. Appareil selon l'une quelconque des revendications 11 à 18, ledit moyen de positionnement, ledit moyen de mesure et ledit moyen d'enregistrement étant disposés dans une machine de construction utilisée dans la formation d'une couche porteuse (120).
